# EUROPÄISCHE PATENTSCHRIFT

(11) **EP 0 840 714 B1**
(45) Veröffentlichungstag und Bekanntmachung des Hinweises auf die Patenterteilung: **04.10.2001**
(21) Anmeldenummer: 96926346.6
(22) Anmeldetag: 15.07.1996
(51) Int. Cl.: C05F 5/00

(54) **organisches Düngemittel aus Biomassen-Rückstanden und Verfahren zu seiner Herstellung**
organic fertiliser from biomass wastes and method of manufacturing thereof
engrais organique a base de déchets de biomasses et son procédé de production

(30) Priorität: 22.07.1995 DE 19526847
(43) Veröffentlichungstag der Anmeldung: 13.05.1998
(73) Patentinhaber: Henkel Kommanditgesellschaft auf Aktien, 40191 Düsseldorf (DE)
(72) Erfinder: PAATZ, Kathleen, D-40593 Düsseldorf (DE); RÄHSE, Wilfried, D-40589 Düsseldorf (DE); PICHLER, Werner, A-6250 Kundl (AT); FUES, Johann, Friedrich, D-41516 Grevenbroich (DE); VON TAPAVICZA, Stephan, D-40699 Erkrath (DE)
(86) Internationale Anmeldenummer: EP9603087
(87) Internationale Veröffentlichungsnummer: WO9703930

(56) Entgegenhaltungen:
- EP-A- 0 117 800
- DE-A- 3 204 466
- US-A- 2 626 237

## Beschreibung

Die Erfindung betrifft das heute in zunehmendem Maße großtechnische Bedeutung erlangende Gebiet biotechnologischer Verfahren, die unter Einsatz und Züchtung von Mikroorganismen wie Bakterien, Hefen, Pilzen und/oder Algen, Wertstoffe und Wertstoffgemische für die unterschiedlichsten Einsatzgebiete großtechnisch zugänglich machen. Betroffen sind dabei Wertstoffprodukte aus dem Bereich der Nahrungs- und Genußmittelindustrie, ebenso wie Produkte der pharmazeutischen Industrie, beispielsweise Antibiotika und Vitamine, spezifische Chemikalien wie Citronensäure oder Aminosäuren. Weitere wichtige Beispiele sind die Herstellung von Enzymen für die unterschiedlichsten Einsatzzwecke in Technik, Haushalt und Gewerbe, beispielsweise für den Einsatz in Textilwaschmitteln und/oder allgemein in Reinigungsmitteln. Benannt seien hier die Sammelbegriffe entsprechender Proteasen, Amylasen, Lipasen, Cellulasen und Pektinasen. Auf biotechnologischem Weg gewonnene Wertstoffe dieser Art finden im weitesten Umfeld großtechnische Verwendung. Lediglich beispielhaft sei verwiesen auf die nachfolgende in Buchform erschienene Veröffentlichung H. Dellweg, "BIOTECHNOLOGIE", Grundlagen und Verfahren, VCH Verlagsgesellschaft mbH Weinheim, 1987, und die umfangreiche dort zitierte Sekundärliteratur.

Die Wertstoffgewinnung durch Züchtung ausgewählter Mikroorganismenkulturen führt neben der Bildung der angestrebten Wertstoffe in der Regel zu beträchtlichen Mengen an Biomasse-Rückständen. Gekennzeichnet sind diese Rückstandsmassen durch ihren Gehalt an Mikroorganismen und/oder ihren Folgeprodukten aus der Wertstoffabtrennung, wobei häufig entsprechende Stoffe und Stoffgemische in Abmischung mit den zur Mikroorganismenaufzucht eingesetzten Hilfsstoffen und Hilfsstofflösungen in wäßriger Phase vorliegen.

Die Aufarbeitung dieser Biomassen-Rückstände kann durchaus problematisch sein. Die gesetzlichen Regelungen fordern hier nicht nur die Sterilisation dieser Verfahrensrückstände, die in der Regel durch eine hinreichend lange Hochtemperaturbehandlung der wäßrigen Zubereitungen sichergestellt werden kann, die Biomassen-Rückstände zeichnen sich durch eine Reihe weiterer schwierig zu bewältigender Produkteigenschaften aus. Sehr häufig sind diese sekundären Reaktionsprodukte durch ihren starken und nicht oder nur eingeschränkt akzeptabelen Geruch gekennzeichnet. Der Versuch der Auftrocknung entsprechender wäßrigen Zubereitungen führt einerseits zu entsprechenden Geruchsbelastungen im Abgasstrom, zum anderen fallen häufig stark staubende Trockenprodukte an. Die Einleitung entsprechender Biomassen beziehungsweise ihrer wäßrigen Zubereitungen in die übliche Abwasseraufbereitung ist in der Regel mit beträchtlichen Zusatzkosten verbunden. Die einschlägige Industrie versucht dementsprechend sinnvollen Gebrauch dieser Biomassen-Rückstände zu machen, ist hier aber wegen der zuvor dargestellten Stoffparameter starken Begrenzungen unterworfen.

Ein interessantes Einsatzgebiet für Biomassen der hier betroffenen Art muß deren Verwendung als Düngemittel für das Pflanzenwachstum sein. Die hier betroffenen Folgeprodukte technologischer Prozesse zur Wertstoffgewinnung stellen in aller Regel im Produktions- beziehungsweise Züchtungsprozeß den Einsatz von schadstofffreien oder wenigstens schadstoffarmen Stoffgemischen sicher. Gleichzeitig liegen aus der Aufzucht der Mikroorganismen die auch für das Pflanzenwachstum entscheidenden Wertstoffe und Wertstoffgemische wie Stickstoff, Phosphor, Kalium, Magnesium und Spurenelemente in optimalen Mischungsverhältnissen vor. Der Einsatz dieser Biomassen-Rückstände als Düngemittel ist dementsprechend eine seit langem bekannte Konzeption zur Reststoffverwertung. Aufgrund der zuvor geschilderten Schwierigkeiten unterliegt die praktische Verwertung jedoch beträchtlichen Einschränkungen.

US 2,626,237 offenbart ein Verfahren zur Trennung der flüchtigen von den nichtflüchtigen Bestandteilen wäßriger Rückstände der Fermentation von Melassen, bei dem die als Düngemittel geeigneten nichtflüchtigen Bestandteile als körniges Feststoffgut anfallen. Das offenbarte Verfahren zeichnet sich einerseits durch das Rühren der vorgelegten erhitzten Teilchenmenge beziehungsweise einen dementsprechend vorhandenen Rührer und andererseits durch die dadurch hervorgerufene konstante Größe der erhaltenen Granulatteilchen aus, die immer nur die Teilchengröße des zu Beginn vorgelegten Granulats aufweisen.

EP 0 117 800 A1 offenbart ein Verfahren zur Herstellung eines granulierten Düngemittels aus Schlempen, indem eine geeignet konzentrierte Schlempe in einem mit Brennern bestückten Kessel verascht wird, die aschenförmigen Mineralstoffe als Schmelze im Unterteil des Kesselraums anfallen und in den flüssigen Strom der geschmolzenen Asche ein Fluid, beispielsweise Wasserdampf, injiziert wird, um diesen zu brechen und tröpfchenförmig zu verteilen, wobei die Tröpfchen in ein Bad einer mit Aschen gesättigten Lösung geschleudert werden.

### Aufgabe der Erfindung

Die Erfindung geht von der Aufgabe aus, ein einfaches Verfahren zur Aufarbeitung der hier dargestellten Biomasse-Rückstände zur Verfügung zu. stellen, das von den geschilderten Einschränkungen und Schwierigkeiten befreit ist, gleichzeitig aber in einfachster Weise die großtechnische Verarbeitung solcher Biomassen-Rückstände ermöglicht. Die erfindungsgemäße Lehre will insbesondere zu Kornform aufgetrocknete Anbietungsformen für diese Sekundärprodukte biotechnologischer Verfahren zugänglich machen, die sich durch Staubfreiheit und wenigstens weitgehende Geruchsfreiheit auszeichnen. Dabei soll das Aufarbeitungsverfahren in der Weise die volle Verfahrenskontrolle ermöglichen, daß keine unerwünschte Abgabe von beispielsweise Geruchsstoffen in die Umwelt auftritt. Die erfindungsgemäße Lehre will damit insbesondere die Überführung wäßriger Biomasse-Zubereitungen im geschlossenen Verfahrenskreislauf in das geschilderte kornförmige Trockengut ermöglichen. Dieses Trockengut ist dann ohne die zuvor dargestellten Belastungen handhabbar, so daß es sowohl im großflächigen Einsatz in Land- und Forstwirtschaft als inbesondere aber auch für den individuellen Kleinverbrauch in Haus und Garten geeignet ist.

### Die erfindungsgemäße Lösung der gestellten Aufgabe

Die Lehre der Erfindung setzt zur Lösung der hier geschilderten Aufgabe einen an sich bekannten Verfahrenstyp zur Auftrocknung der wäßrigen Biomassen-Rückstände ein. Erfindungsgemäß erfolgt deren Auftrocknung im an sich bekannten Verfahren der Sprühagglomeration unter gleichzeitiger Trocknung in der Wirbelschicht, wobei jetzt jedoch - bezogen auf die Arbeitsbedingungen der Trocknungsstufe - überhitzter Wasserdampf als Trocknungsgasstrom zur Verwendung kommt. Dieses Trocknungsverfahren ermöglicht das Arbeiten im geschlossenen Kreislauf unter Rückführung und Wiederaufheizung des Anteiles an Wasserdampf, der den Trocknungsgasstrom darstellt. Aus den aus der Trocknungszone abgezogenen Brüden wird der verdampfte Wasseranteil abgetrennt, gewünschtenfalls einer weiteren Verwertung zugeführt und schließlich - bevorzugt unter Rückgewinnung der Kondensationswärme - kondensiert. Dabei nicht-kondensierende Gasanteile werden zweckmäßigerweise der Verbrennung zugeführt. Das kondensierte Brüdenwasser kann in konventioneller Weise der Abwasseraufbereitung unterworfen werden. Hier sind jetzt aber nur noch vergleichsweise geringe Mengen an organischer Substanz dem Abbau zu unterwerfen.

Gegenstand der Erfindung ist dementsprechend in einer ersten Ausführungsform das Verfahren zur Aufarbeitung von Biomassen-Rückständen aus der biotechnologischen Wertstoffgewinnung mittels Mikroorganismen, die nach Abtrennung der gewonnenen Wertstoffe einer Entsorgung zuzuführen sind, zu einem körnigen Feststoffgut unter Mitverwendung einer Gasphase, die überhitzten Wasserdampf enthalten kann, bei dem man fließfähige Zubereitungen der Biomassen-Rückstände mittels der an sich bekannten Wirbelschichttrocknung unter Sprühagglomeration und Einsatz von überhitztem Wasserdampf als Trocknungsgas in ein wenigstens weitgehend geruchsfreies, steriles und staubfreies Feststoffgut, das als organisches Düngemittel mit Langzeitwirkung einsetzbar ist, umwandelt.

Das Pflanzenwachstum fördernde organische Düngemittel in Kornform, die akzeptable Gebrauchseigenschaften - insbesondere wenigstens weitgehende Freiheit von Geruch und Staubbildung - mit Langzeit-Düngung verbinden und damit auch für den individuellen Kleinverbrauch in Haus und Garten geeignet sind, werden nach dem zuvor dargestellten Verfahren hergestellt.

In einer Abwandlung der bisher geschilderten Lehre betrifft die Erfindung ein Verfahren zur Wirbelschicht-Sprühagglomeration der geschilderten Art, wobei jetzt aber zusammen mit den Biomasse-Rückständen weitere Wert- und/oder Hilfsstoffe zur Förderung des Pflanzenwachstums in das körnige Gut eingebunden werden. Einzelheiten zu dieser Ausführungsform werden in der Erfindungsbeschreibung dargestellt.

### Einzelheiten zur erfindungsgemäßen Lehre

Die konkrete Darstellung der Erfindung im nachfolgenden lehnt sich an die biotechnologische Gewinnung von Enzymen des Wasch- und Reinigungsmittelbereiches an. Es ist sofort einleuchtend, daß hier lediglich beispielhaft die Prinzipien der erfindungsgemäßen Lehre dargestellt werden, die in gleicher Weise auf andere Arbeitsbereiche der hier betroffenen biochemischen beziehungsweise biotechnologischen Verfahren anwendbar sind.

In der der Erfindung vorgeschalteten Arbeitsstufe wird also beispielsweise eine Waschmittel-Protease bildende Bakterienpopulation in an sich bekannter Weise in einem wäßrigen Nährmedium gezüchtet, das insbesondere organische Kohlenstoff- und Stickstoffquellen, Nährstoffsalze z.B. entsprechende Verbindungen des Kaliums, Phosphat sowie Spurenelemente enthält, gezüchtet. Der aus der Aufzuchtsstufe abgezogene Produktstrom wird der an sich bekannten Aufarbeitung zur Abtrennung der gebildeten Enzyme - beispielsweise durch Membrantrennverfahren - unterworfen. Die Reinigung und Aufkonzentrierung der wäßrigen Enzymlösung ist nicht Gegenstand der vorliegenden Erfindung.

Die nach der Enzymgewinnung zurückbleibende wäßrige Biomassen-Rückstände enthaltende Zubereitung ist das Einsatzmaterial für den erfindungsgemäß beschriebenen Arbeitsschritt. Hier kann es zweckmäßig sein zunächst in an sich bekannter Weise die noch lebensfähigen Anteile der Mikroorganismenpopulation in einer Hitzesterilisation abzutöten. Dabei gilt allerdings, daß durch das erfindungsgemäße Aufarbeitungsverfahren ja auch bei der nachfolgenden Trocknung der Biomassen-Rückstände mit dem überhitzten Wasserdampf unter Anwendung geeigneter Arbeitsbedingungen wenigstens anteilsweise eine zusätzliche Sterilisation stattfinden kann.

In einer bevorzugten Ausführungsform führt man dem Verfahren Biomassen-Rückstände zu, die für den beabsichtigten Einsatz als Düngemittel schadstoffarm beziehungsweise schadstofffrei sind. In einer weiteren bevorzugten Ausführungsform unterwirft man dem Verfahren Biomassen-Rückstände aus der biotechnologischen Wertstoffgewinnung, insbesondere aus der fermentativen Wertstoffbildung unter Einsatz von Bakterien, Pilzen, Hefen und/oder Algen.

Die primär als Einsatzmaterial anfallenden wäßrigen Suspensionen der Biomassen-Rückstände liegen häufig in stark verdünnter Form - beispielsweise mit Trockensubstanzgehalten im Bereich unter 10 Gew.-% - vor. Für die Durchführung des erfindungsgemäßen Verfahrens kann es zweckmäßig sein in einer ersten Arbeitsstufe in an sich bekannter Weise den Trockensubstanzgehalt durch einfaches Eindampfen anzuheben. Hier kann die Einstellung von entsprechenden Feststoffgehalten im Bereich oberhalb 10 Gew.-%, z.B. im Bereich von etwa 15 bis 25 Gew.-%, sinnvoll sein. Es liegt dann eine gut fließ- und pumpfähige Lösung/Suspension der Biomassen-Rückstände in einem Überschuß wäßriger Phase vor, die der erfindungsgemäß definierten Auftrocknung in der Wirbelschicht unter Bildung des körnigen Gutes in technisch sinnvoller Weise unterworfen werden kann.

In einer bevorzugten Ausführungsform kann für eine solche Stufe der Aufkonzentration einer ursprünglich anfallenden stark verdünnten wäßrigen Biomassen-Lösung bzw. -Suspension wenigstens anteilsweise der Energieinhalt des Brüdenteilstromes eingesetzt werden, der dem verdampften Wasseranteil des aufzutrocknenden Einsatzgutes entspricht und der nach Verlassen der Trocknungszone von dem Heißdampf abgetrennt wird. Hier können im einzelnen alle an sich bekannten einschlägigen Technologien zur Energierückgewinnung eingesetzt werden. Auf das allgemeine Fachwissen wird insoweit verwiesen.

Die Wirbelschichttrocknung erfolgt im einzelnen in an sich bekannter Weise derart, daß man die Trocknung der Biomassen-Rückstände als Sprühagglomeration in rotierender Wirbelschicht durchführt und dabei den Kornaufbau durch Versprühen der wäßrigen Zubereitung in die Wirbelschicht unter Naßagglomeration mit nachfolgender Trocknung durchführt. Die Wirbelschichtkammer kann in an sich bekannter Weise von einer sich konisch erweiternden Abscheide- und Beruhigungskammer überlagert sein. Die mit dem Trocknungsgasstrom aus der Wirbelkammer aufsteigenden Granulate können hier unter die Austragsgeschwindigkeit abgebremst werden, so daß sie wieder in die Wirbelschicht zurückfallen.

Als Gasphase und damit als Wirbel- und Trocknungsmedium wird im erfindungsgemäßen Verfahren überhitzter Wasserdampf eingesetzt. Es ist dabei bevorzugt, diesen der Wirbelkammer zugeführten Trocknungsgasstrom mit Einsatztemperaturen von wenigstens 150°C und vorzugsweise mit Einsatztemperaturen im Bereich von 180 bis 300°C der Wirbelkammer zuzuführen. Besonders geeignete Einsatztemperaturen des der Wirbelkammer zugeführten überhitzten Wasserdampfes können im Bereich von 200 bis 250°C liegen.

Wenigstens bei Beginn des Verfahrens wird die Wirbelkammer mit einer geeigneten Keimdosierung zur Granulatausbildung durch Aufsprühen der aufzutrocknenden wäßrigen Biomassen-Suspension ausgerüstet. In wichtigen Ausführungsformen werden allerdings auch im weiteren Verfahren absatzweise oder bevorzugt kontinuierlich gewisse Anteile einer solchen Keimdosierung der Wirbelschichttrocknungszone zugeführt. Als bevorzugtes Keimmaterial kommt dabei gemahlenes Biomassen-Trockengut in Betracht, das bevorzugt arteigenes Trockengut ist.

Das aufzutrocknende wäßrige Biomassen-Einsatzgut wird der Wirbelschichtkammer zugeführt und hier bevorzugt in diesen Trocknungsraum eingesprüht. In einer wichtigen Ausführungsform der erfindungsgemäßen Lehre wird dabei zum Einsprühen des wäßrigen Einsatzgutes mit Mehrstoffdüsen unter Mitverwendung einer Treibgasphase gearbeitet. Hier ist in einer wiederum besonders bevorzugten Ausführungsform die Verwendung von überhitztem Wasserdampf auch als Treibgas für das Versprühen der wäßrigen Biomassen-Flüssigphase ein wichtiges Element der erfindungsgemäßen Lehre.

Durch Einstellung der Arbeitsbedingungen in der Wirbelschicht-Trocknungszone und die jeweils miteinander kombinierten Verfahrensparameter ist die Steuerung der mittleren Verweilzeiten des entstehenden körnigen Trockengutes im Bereich des überhitzten Wasserdampfes sowie die Steuerung der angestrebten mittleren Korngröße möglich. Es kann erfindungsgemäß bevorzugt sein die Arbeitsparameter so aufeinander abzustimmen, daß die mittlere Verweilzeit des körnigen Trockengutes im Bereich des überhitzten Wasserdampfes wenigstens 5 bis 10 Minuten, zweckmäßig wenigstens 15 Minuten und vorzugsweise wenigstens 25 bis 30 Minuten beträgt. In wichtigen Ausführungsformen kann eine mittlere Verweilzeit im Stundenbereich und dabei insbesondere im Bereich von etwa 1 bis 3 Stunden bevorzugt sein. Dabei lassen sich mittlere Korngrößen des Fertiggutes im mm-Bereich einstellen, wobei entsprechende Teilchendurchmesser im Bereich von 0,5 bis 5 mm und insbesondere im Bereich von 1 bis 3 mm bevorzugt sein können.

Die sich in dem kornförmigen Gut in der Trocknungszone einstellende Guttemperatur kann insbesondere über den Restwassergehalt des körnigen Gutes und/oder mittels der Arbeitsbedingungen und hier insbesondere durch Regelung der Austrittstemperatur des als Trocknungsgas eingesetzten Stromes von überhitztem Wasserdampf geregelt werden. Geeignete Dampfaustrittstemperaturen liegen bei wenigstens etwa 110°C, wobei es zweckmäßig sein kann mit Austrittstemperaturen des überhitzten Wasserdampfes von wenigstens 115 bis 120°C zu arbeiten. Austrittstemperaturen bis 150°C können gewünschtenfalls eingesetzt werden, wobei sich das Verfahrensprinzip verständlicherweise aber auch mit noch höheren Austrittstemperaturen der Wasserdampfphase verwirklichen läßt.

Für die Verwirklichung des erfindungsgemäßen Zieles, ein steriles und gleichzeitig staub- und wenigstens weitgehend geruchsfreies körniges Gut mit hohem Nährstoffgehalt beim Einsatz als Düngemittel für das Pflanzenwachstum zu erhalten, ist diese Behandlung des Biomassen-Rückstandes in der Wirbelschicht mit der überhitzten Wasserdampfphase der entscheidende Schlüsselparameter. Die aufgetrocknete Biomasse stellt aufgrund ihrer Bildungsvorgeschichte eine - bezüglich ihrer chemischen Zusammensetzung - ideale Kombination von wesentlichen Haupt- und Spurenkomponenten eines Düngemittels dar. Die Behandlung dieses Einsatzgutes mit dem überhitzten Wasserdampf im Sinne des erfindungsgemäßen Verfahrens führt nicht nur zum schichtweisen Aufbau der letztlich angestrebten staubfreien körnigen Granulatkugeln, insbesondere gelingt es durch das erfindungsgemäße Verfahren, die mit der Bildung von Biomassen in aller Regel verbundenen lästigen Geruchskomponenten aus dem aufgetrockneten Feststoffgut auszutragen. Verbunden mit diesen Vorteilen ist die bereits dargestellte Möglichkeit der Sterilisation beziehungsweise Zusatzsterilisation des Einsatzgutes. Im Ergebnis führt die erfindungsgemäße Aufarbeitung des Problemgutes der Biomassen-Abfälle zu einem hochwertigen Feststoffprodukt mit akzeptablen Gebrauchseigenschaften.

Ein für die großtechnische Anwendung wichtiges Element des erfindungsgemäßen Verfahrens liegt in der Möglichkeit, den als Trocknungsgasstrom eingesetzten überhitzten Wasserdampf im Kreislauf zu führen und lediglich die verdampften Wasseranteile mittels Kondensation aus diesem Kreislaufstrom auszuschleusen. Im einzelnen wird dabei wie folgt vorgegangen: Bevorzugt wird der aus der Trocknungszone abgezogene Heißdampfstrom von mitgerissenen Feinststaubanteilen befreit. Das kann beispielsweise durch Behandlung in einem Zyklon erfolgen. Diese abgetrennten Feinstoffanteile werden zweckmäßigerweise in die Trocknungszone rückgeführt und übernehmen hier anteilsweise die Aufgabe des keimbildenden Trockengutes für das Entstehen neuer Kugeln. Der so von Feststoffanteilen befreite Heißdampfstrom wird - zum Beispiel durch partielle Kondensation und/oder mittels anderer Abtrennung - von dem bei der Trocknung verdampften Wasseranteil befreit. Der verbleibende Anteil des Heißdampfes wird in geeigneter Weise wieder auf Einsatztemperatur des Trocknungsgasstromes aufgeheizt und im Kreislauf in die Wirbelschicht zurückgeführt. Teilströme des Wasserdampfes können als Hilfsströme unterschiedliche Aufgaben erfüllen. Als Beispiel sei hier die zuvor erwähnte Verwendung eines Anteiles des überhitzten Wasserdampfes zur Aufkonzentration des wäßrigen Einsatzgutes und/oder die Verwendung als Treibgas beim Versprühen der wäßrigen Biomassen-Suspension in die Wirbelschicht erwähnt. Eine andere Möglichkeit liegt in dem klassierenden Abzug beim kontinuierlichen Granulataustrag aus der Wirbelschicht. Hier fallen die in der Wirbelschicht vorliegenden Granulate, nachdem sie eine bestimmte Größe erreicht haben, im Gegenstrom durch einen mit Heißdampf aufwärts durchströmten Abzug, aus dem sie schließlich beispielsweise mittels einer Doppelklappenschleuse ausgetragen werden können.

Entscheidend ist, daß in allen hier dargestellten und in das Verfahren integrierten Verfahrensschritten die geschlossene Kreislaufführung der nicht kondensierten Anteile der Heißdampfphase gewährleistet ist. Der aus diesem Dampfkreislauf ausgetragene und kondensierte Brüdenteilstrom wird in an sich bekannter Weise aufgearbeitet. Nicht kondensierende gasförmige Anteile, die insbesondere durch geruchsbildende Anteile belastet sind, können der Vernichtung beispielsweise durch Verbrennung zugeführt werden. Das Brüdenkondensat kann in konventioneller Weise der Abwasseraufbereitung unterworfen werden.,

### Abwandlung und weitere Ausgestaltung der erfindungsgemäßen Lehre

In einer besonders wichtigen Ausführungsform der Erfindung wird die bisher dargestellte technische Lehre dahingehend abgewandelt, daß in der Wirbelschichtsprühagglomeration die Biomassen-Rückstände auf Mikroorganismenbasis zusammen mit weiteren Wert- und/oder Hilfsstoffen zur Förderung des Pflanzenwachstums verarbeitet und zu einem bevorzugt körnig agglomerierten Gut gebunden werden. Der Begriff der Wert- und/oder Hilfsstoffe zur Förderung des Pflanzenwachstums erfaßt dabei insbesondere die beiden nachfolgenden Funktionsbereiche: Zusätzliche Wertstoffe mit Düngemittelwirkung und/oder Hilfsstoffe zur Erhöhung der Aufnahme und Retention von Wasser in dem agglomerierten Gut. Es ist einleuchtend, daß auch mittels der zuletzt genannten Wertstoffgruppe wichtiger Einfluß auf das Pflanzenwachstum genommen werden kann. Lediglich beispielhaft sei auf die Bodenbegrünung in weitgehend trockenen Landstrichen verwiesen, in denen durch regelmäßiges Bewässern wenigstens in der Anfangsphase das Pflanzenwachstum sicherzustellen ist. Die Mitverwendung von Wasserretentions-Hilfsmitteln, die noch dazu zusätzlich Wertstoffe mit Düngemittelcharakter im erfindungsgemäßen Sinne verbinden, kann hier die Pflanzenaufzucht substantiell erleichtern.

Die in dieser Ausführungsform erfindungsgemäß mitzuverwendenden Wert- und Hilfsstoffe können in einer bevorzugten Ausführungsform ihrerseits pflanzlichen und/oder tierischen Ursprungs sein. Die erfindungsgemäße Lehre sieht aber auch die Mitverwendung entsprechender mineralischer Hilfsstoffe vor. Diese zusätzlichen Wertstoffkomponenten können ihrerseits wasserlöslich sein, in wichtigen Ausführungsformen der Erfindung sind sie wenigstens anteilsweise wenigstens weitgehend wasserunlöslich. Hier liegen sie bevorzugt in feinpartikulärer Form vor, beispielsweise mit Teilchengrößen im Bereich bis zu einigen Millimetern, durchaus aber wenigstens anteilsweise auch mit Teilchengrößen deutlich unterhalb 1 mm.

In dieser Ausführungsform kommt den zuvor beschriebenen wäßrigen Zubereitungen der Biomassen-Rückstände auf Mikroorganismenbasis eine zusätzliche Funktion im Rahmen der Mischagglomerate zu. Die insbesondere anteilsweise aufkonzentrierten wäßrigen Zubereitungen dieser Mischungskomponente wirken hier als Kleber und Agglomerationshilfe. So sind beispielsweise entsprechende wäßrige Zubereitungen von Biomasse-Rückständen aus der fermentativen Enzymgewinnung nach Aufkonzentration auf einen Feststoffgehalt von etwa 20% vergleichsweise viskose Flüssigphasen mit ausgesprochener Klebkraftwirkung. Wird in die Wirbelschicht-Trocknungskammer einerseits feinteilig festes Zusatzmaterial im Sinne der hier beschriebenen Ausgestaltung der erfindungsgemäßen Lehre eingegeben und andererseits die wäßrige Biomassen-Zubereitung in diese Wirbelschicht hinein versprüht, dann findet unter dem Einfluß der Trocknungsgasphase auf Basis des überhitzten Wasserdampfes in der Wirbelschichtstufe eine Agglomeration des Mehrkomponentengemisches unter Ausbildung eines entsprechenden rieselfähigen Mehrkomponenten-Trockengutes statt. Die Mischungsverhältnisse zwischen den zuvor erörterten Biomasse-Rückständen auf Mikroorganismenbasis einerseits und den zusätzlich mitverwendeten Wert- und/oder Hilfsstoffen zur Förderung des Pflanzenwachstums andererseits sind in breitem Bereich variierbar. Zahlenmäßig können hier benannt werden die Bereiche von 5 : 95 bis 95 : 5 - jeweils Gewichtsverhältnisse der hier betroffenen beiden Stoffklassen. Bevorzugt macht der Anteil der Biomassen-Rückstände auf Mikroorganismenbasis wenigstens etwa 10 bis 20 Gew.-% und insbesondere wenigstens etwa 30 bis 40 Gew.-% des körnigen Trockengutes aus. In einer weiterhin bevorzugten Ausführungsform dieser Ausgestaltung liegt der Gehalt an Biomasse-Rückständen auf Mikroorganismenbasis bei wenigstens etwa 50 Gew.-% des trockenen Mischproduktes. Im einzelnen werden die jeweils zu wählenden Mischungsverhältnisse mitbestimmt durch die im praktischen Einsatz gewünschte Funktionalität. So kann die Mitverwendung der höhere Prozentsätze an Biomassen-Rückstände enthaltenden Mischagglomerate dann besonders wichtig sein, wenn das beabsichtigte Schwergewicht in der Anwendung auf der Sicherstellung einer hinreichenden Langzeitdüngung liegt. Liegt dagegen das Schwergewicht auf der Seite des Anbietens einer möglichst ausgeprägten Wasserretention, so kann im Mischgut der Anteil an Feststoffkomponenten überwiegen, der zur Aufnahme und vorübergehenden Bindung von Wasser bei einem Bewässerungsvorgang der Bodenoberfläche besonders befähigt ist. Hier bietet sich dann insbesondere an, die Biomassen-Rückstände in untergeordneter Menge einzusetzen und damit einen hinreichenden Kleber zur Verfügung zu stellen, der zusätzlich Mehrfunktionalität über seine Düngemittelwirkung entfaltet.

Die in dieser Ausführungsform eingesetzten zusätzlichen Hilfsstoffe können bei ihrer Verwendung als feinteiliges Feststoffgut auch bei der Herstellung der Wirbelschichtagglomerate behilflich sein. Sie können hier insbesondere auch die Funktion der Keimdosierung übernehmen. In dieser Ausführungsform ist das mitzuverwendende feinteilige Feststoffgut in seinen mittleren Teilchengrößen so abgesenkt, daß hier Werte unterhalb 1 mm und insbesondere Werte nicht größer als 0,5 mm bevorzugt sein können.

Wenigstens weitgehend wasserunlösliche Hilfsstoffe der hier betroffenen Art pflanzlichen Ursprungs sind insbesondere entsprechend zerkleinerte Pflanzenteile, die sich durch eine hinreichende Cellulosestruktur auszeichnen. Entsprechendes Material kann sich dabei von zerkleinerten Frischpflanzen oder von getrocknetem Pflanzengut ableiten. Beispiele für den zuletzt genannten Fall sind Holzmehl, Sägespäne und dergleichen. Geeignet sind insbesondere aber auch Wertstoffe von der Art des Humus und/oder Torf. Grundsätzlich gilt für alle diese Materialien, daß über die Technik der Trocknung in der Phase des überhitzten Wasserdampfes die in der Pflanzenstruktur vorhandende feinzellige Cellulose-Kammerstruktur aufgebrochen und von ihrem ursprünglichen Wassergehalt wenigstens weitgehend befreit wird. In der praktischen Anwendung bei Zutritt von Wasser steht dann damit diese feinzellige Kammerstruktur des Cellulose-basierten Naturstoffmaterials für die Rehydratisierung zur Verfügung, so daß hier die erhöhte Wasserretention im Pflanzenwurzelbereich möglich wird. Über langsame Abbauprozesse wird schließlich auch das Cellulose-basierte Hilfsmaterial dem biologischen Abbau unterworfen. Seine Widerstandsfähigkeit gegenüber einem vorzeitigen Abbau ist aber bekanntlich so groß, daß hier doch für einen substantiellen Zeitraum des Pflanzenwachstums ein erhöhtes Feuchteangebot im Wurzelbereich sichergestellt werden kann.

Die hier anhand entsprechender Hilfsstoffe dargestellten Sachverhalte sind in vergleichbarer Weise mit Hilfsstoffen auf tierischer Basis - beispielsweise Knochenmehl - einzustellen. Entsprechendes gilt für Hilfsstoffe auf mineralischer Basis, die ihrerseits zur hinreichenden Wasseraufnahme befähigt sind. Auf das Fachwissen kann insoweit im einzelnen verwiesen werden.

Zu erwähnen ist in diesem Zusammenhang schließlich noch die Möglichkeit, unter Einsatz synthetischer Polymerverbindungen mit der Befähigung zur erhöhten Retention von Wasser Wertstoffgemische im Sinne der erfindungsgemäßen Lehre zur Verfügung zu stellen. Entsprechende Polymerverbindungen sind unter dem Fachbegriff der Super-Slurpers bekannt und insbesondere auf dem Gebiet der Hygieneartikel im großtechnischen Einsatz. Insoweit kann auch hier auf das allgemeine Fachwissen zur Beschaffenheit dieser Hilfsstoffe im Rahmen der erfindungsgemäßen Lehre verwiesen werden.

### Beispiel

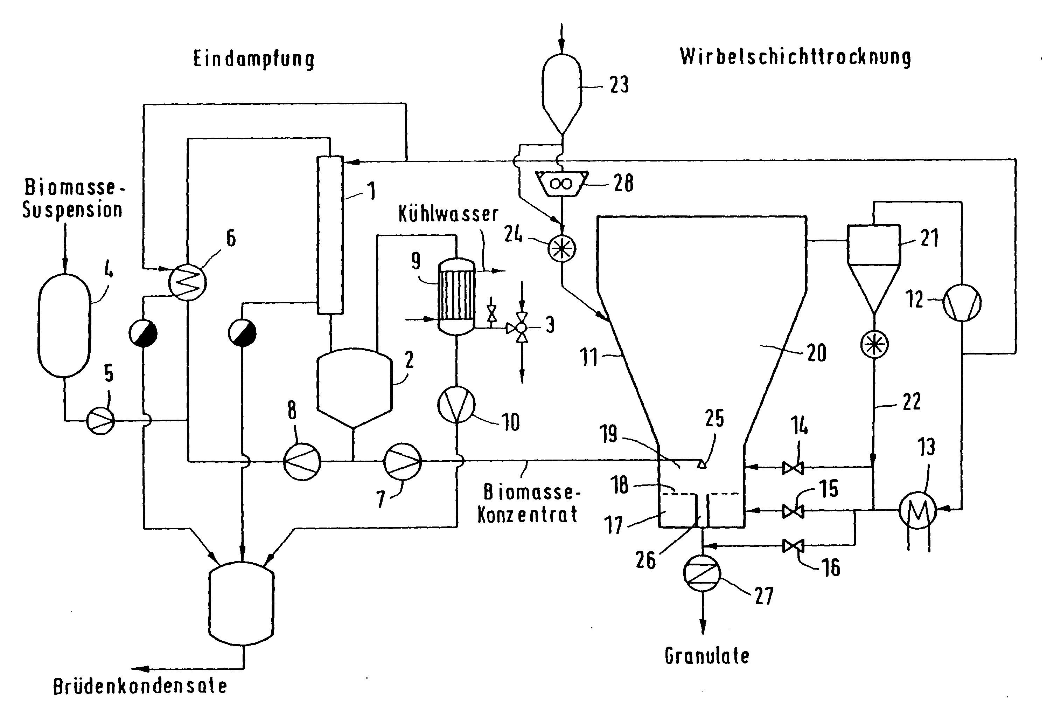

Zur Gewinnung von Proteasen als Enzyme für Waschmittel wurden Bakterien in einem wäßrigen Nährstoffmedium, das organische Kohlenstoff- und Stickstoffquellen sowie Kaliumsalze, Phosphate und Spurenelemente enthielt, in einem Fermentationsprozeß aufgezogen. Nach Abtrennung der bei diesem Prozeß gebildeten Protease durch Membranfiltration wurde die verbleibende Biomasse 20 Minuten auf 120 °C erhitzt, um die Mikroorganismen abzutöten. Danach wurde die wäßrige Biomasse-Suspension, die 5 Gew.-% Trockensubstanz enthielt, zunächst auf eine höhere Konzentration eingedampft und dann in der Wirbelschicht mit überhitztem Wasserdampf zu Granulaten getrocknet. Die dazu verwendete Anlage ist in der beiliegenden Zeichnung erläutert.

In einem Fallstromverdampfer der Firma GEA Wiegand erfolgte die Aufkonzentrierung der Biomasse auf etwa 20 Gew.-%. Der Verdampfer war ein einstufiger 1-Rohr-Fallstromverdampfer (1) (Verdampferrohrabmessungen: Länge = 11000 mm, Durchmesser = 40 mm), direkt dampfbeheizt aus der nachfolgenden Trocknerstufe mit untergebautem Abscheider (2), bei dem Heizdampfdruck und Brüdenraumdruck mittels Wasserstrahlpumpe (3) eingestellt werden konnten. Aus dem Vorlagebehälter (4) wurde die Suspension von der Einspeisepumpe (5) angesaugt und dem Vorwärmer (6) zugeführt und dort durch Dampfbeheizung auf die Siedetemperatur des Verdampfers erhitzt. Danach wurde die Biomasse-Suspension dem Kopf des Verdampferrohres (1) zugeführt. Nach dem Verdampferrohr trennten sich Brüden und Konzentrat. Das Konzentrat wurde mit der Konzentratpumpe (7) abgezogen bzw. zu einem Teil mit der Zirkulationspumpe (8) wieder dem Verdampferrohr zugeführt. Die Kondensation der Brüdendämpfe erfolgte im stehenden Oberflächenkondensator (9). Das Kondensat wurde mit der Kondensatpumpe (10) abgezogen. Die Endkonzentration der Biomasse-Suspension wurde auf 19 - 20 Gew.-% Trockensubstanz eingestellt.

Folgende Verfahrensparameter wurden während der Biomasse-Aufkonzentrierung eingehalten:

| Temperatur: | |
|---|---|
| Einspeisung: | 63 °C |
| Heizdampf: | 86 °C |
| Brüdenkondensat: | 63 °C |
| Konzentrat: | 62,7 °C |

Druck im Abscheider: 220 mbar

| Durchflußmengen: | |
|---|---|
| Einspeisung: | 56,7 kg/h |
| Konzentrat: | 14,7 kg/h |
| Brüdenkondensat: | 42 l/h |

Das Konzentrat der Biomasse-Suspension wurde dann in einer Wirbelschichttrocknungsanlage des Typs WST500 der Firma Haase (11) mit überhitztem Wasserdampf getrocknet und granuliert. Die zum Erzeugen der Wirbelschicht erforderliche Menge des überhitzten Wasserdampfes saugte ein Radilventilator (12) an. Im Wärmeübertrager (13) wurde der Dampf auf die erforderliche Trocknereintrittstemperatur elektrisch überhitzt. Die Dampfmengen für die Staubrückführung, Siebboden und klassierenden Abzug konnten einzeln über Klappen (14 - 16) eingestellt werden. Vom Überhitzer gelangte der Dampf durch die Anströmkammer (17) und den Siebboden (18) in die Wirbelkammer (19). Die Wirbelkammer besaß einen Durchmesser von 500 mm. Er vergrößerte sich über das konische Übergangsstück als Abscheide- und Beruhigungskammer (20) auf 1000 mm. In diesem Apparateteil wurden die mit dem überhitzten Wasserdampf aus der Wirbelkammer aufsteigenden Granulate unter die Austragsgeschwindigkeit abgebremst. Sie fielen in die Wirbelschicht zurück. Der im Dampfstrom verbliebene Staubanteil wurde im Zyklon (21) abgeschieden und gelangte über die Staubrückführung (22) in die Wirbelschicht zurück. Der überhitzte Wasserdampf wurde im Kreislauf geführt, d.h. nach der Trocknung wurde der Dampf im Überhitzer wieder auf die erforderliche Trocknereintrittstemperatur überhitzt. Der aus der Biomasse-Suspension verdampfte Wasseranteil wurde aus dem Kreislauf ausgeschleust und in den anfangs beschriebenen Fallfilmverdampfer als Heizmedium eingespeist. Die Kondensationswärme der Brüden konnte so zurückgewonnen werden. Die Nullfüllung (bereits getrocknete Biomasse) wurde beim Anfahren des Wirbelschichttrockners über den Nullfüllungsbehälter (23) und eine Zellradschleuse (24) in den Trockner eingebracht und verteilte sich gleichmäßig in der Wirbelschicht. Auf diese wurde mit einer Zweistoffdüse (25) die aufkonzentrierte Biomasse-Suspension mit Hilfe einer Dosierpumpe (7) aufgedüst. Das verdampfende Wasser wurde mit dem Trocknungsgas ausgetragen. Nachdem die in der Wirbelschicht vorhandenen Granulate die gewünschte Größe erreicht hatten, wurden sie durch den klassierend wirkenden Abzug (26) über eine Doppelpendelklappenschleuse (27) aus der Wirbelschicht ausgetragen. Um Granulatdurchmesser von ca. 2,0 - 2,5 mm im Endprodukt zu erhalten, wurden kontinuierlich arteigene Granulationskeime über den Nullfüllungsbehälter und Zerkleinerung in einer Mühle (28) (Durchmesser ca. 1,4 mm) in die Wirbelschicht eingetragen.

Die Verfahrensparameter der Wirbelschichttrocknung faßt die nachstehende Aufstellung zusammen:

| Mengen an Biomasse: | |
|---|---|
| Nullfüllung (gemahlene Biomasse) | 40 kg |
| Keimdosierungsmenge | 1,2 kg/h |
| Zulaufmenge an Biomasse-Suspension | 105 l/h |
| Brüdenkondensatmenge | 86,5 kg/h |
| Granulatmenge | 18,5 kg/h |

| Gasströme (überhitzter Wasserdampf: | |
|---|---|
| Gasstrom durch den Siebboden | 3850 m³/h |
| Gasstrom im klassierenden Abzug | 215 m³/h |
| Gasstrom durch die Staubrückführung | 175 m³/h |
| Treibgasstrom durch die Zweistoffdüse | 10 m³/h |

| Temperaturen: | |
|---|---|
| Temperatur nach dem Dampfüberhitzer (elektrischer Überhitzer) | 210 °C |
| Temperatur Wirbelkammereintritt | 210 °C |
| Temperatur Wirbelkammeraustritt | 130 °C |
| Temperatur Trockneraustritt/Zykloneneintritt | 129 °C |
| Temperatur des Kondensats | 48 °C |

| Drucke: | |
|---|---|
| Gesamtdruckverlust | 3500 Pa |
| Druckverlust der Wirbelschicht | 1500 Pa |
| Flüssigkeitsdruck zur Zweistoffdüse | 1,8 bar |
| Treibgasdruck zur Zerstäubung | 2,4 bar |

Das auf diese Weise hergestellte staubfreie Düngergranulat wies folgende Kenndaten auf:

| Zusammensetzung: | |
|---|---|
| N | 4,7 % |
| P₂O₅ | 3,0 % |
| K₂O | 1,8 % |
| Mg | 0,2 % |
| Fe | 0,02 % |
| Mn | 0,02 % |
| Ni | < 0,01 % |
| Zn | 0,006 % |

| | |
|---|---|
| Wassergehalt | 0,5 % |
| Schüttgewicht | 820 g/l |
| Kornverteilung | (Siebanalyse) |

| | |
|---|---|
| > 3,2 mm | 0,2 % |
| 2,5 - 3,2 mm | 15,5 % |
| 2,0 - 2,5 mm | 66,3 % |
| 1,6 - 2,0 mm | 17,0 % |
| < 1,6 mm | 1,0 % |

Das gewonnene Düngergranulat wies einen sehr geringen Geruch auf, der nur in der Nähe wahrnehmbar und in keiner Weise unangenehm war. Ein zum Vergleich hergestelltes Material, das aus derselben Biomasse-Suspension durch Trocknung mit Luft gewonnen worden war, hatte dagegen einen starken und sehr unangenehmen Geruch.

## Patentansprüche

1. Verfahren zur Aufarbeitung von Biomassen-Rückständen aus der biotechnologischen Wertstoffgewinnung mittels Mikroorganismen, die nach Abtrennung der gewonnenen Wertstoffe einer Entsorgung zuzuführen sind, zu einem körnigen Feststoffgut unter Mitverwendung einer Gasphase, **dadurch gekennzeichnet, daß** man fließfähige Zubereitungen der Biomassen-Rückstände mittels der an sich bekannten Wirbelschichttrocknung unter Sprühagglomeration und Einsatz von überhitztem Wasserdampf als (1) Trocknungsgasphase in ein wenigstens weitgehend geruchsfreies, steriles und staubfreies Feststoffgut, das als organisches Düngemittel mit Langzeitwirkung einsetzbar ist, umwandelt.

2. Verfahren nach Anspruch 1, **dadurch gekennzeichnet, daß** man die Trocknung der Biomassen-Rückstände als Sprühagglomeration in rotierender Wirbelschicht durchführt und dabei den Kornaufbau durch Versprühen der wäßrigen Zubereitung in die Wirbelschicht unter Naßagglomeration mit nachfolgender Trocknung durchführt.

3. Verfahren nach einem der Ansprüche 1 oder 2, **dadurch gekennzeichnet, daß** man das wäßrige Biomasse-Einsatzgut über Mehrstoffdüsen mit Hilfe einer Treibgasphase in die Wirbelschicht einsprüht, wobei als Treibgas vorzugsweise überhitzter Wasserdampf eingesetzt wird.

4. Verfahren nach einem der Ansprüche 1 bis 3, **dadurch gekennzeichnet, daß** man den überhitzten Wasserdampf mit Einsatztemperaturen von wenigstens 150°C, vorzugsweise im Bereich von 180 bis 300°C und insbesondere im Temperaturbereich von 200 bis 250 °C der Trocknungszone zuführt.

5. Verfahren nach einem der Ansprüche 1 bis 4, **dadurch gekennzeichnet, daß** mit mittleren Verweilzeiten des körnigen Trockengutes im Bereich des überhitzten Wasserdampfes von wenigstens 5 bis 10 Minuten, zweckmäßig von wenigstens 15 Minuten, vorzugsweise von wenigstens 30 Minuten und insbesondere im Stundenbereich gearbeitet wird, wobei - Verweilzeiten von 1 bis 3 Stunden bevorzugt sein können.

6. Verfahren nach einem der Ansprüche 1 bis 5, **dadurch gekennzeichnet, daß** mit Austrittstemperaturen des überhitzten Wasserdampfes aus der Trocknungszone von wenigstens 110°C, vorzugsweise von wenigstens 115 bis 120°C gearbeitet wird.

7. Verfahren nach einem der Ansprüche 1 bis 6, **dadurch gekennzeichnet, daß** man mit Kreislaufrückführung des aus der Wirbelschichttrocknungszone abgezogenen überhitzten Wasserdampfes arbeitet, wobei bevorzugt der aus der Trocknungszone abgezogene Heißdampfstrom von mitgerissenen Feinstaubanteilen befreit und diese in die Trocknungszone rückgeführt werden, der bei der Trocknung verdampfte Wasseranteil abgetrennt und bevorzugt einer weiteren Nutzung zugeführt wird, während der im Kreislauf geführte Strom des überhitzten Wasserdampfes vor seiner Rückführung in die Trocknungszone auf Einsatztemperaturen wieder aufgeheizt wird.

8. Verfahren nach einem der Ansprüche 1 bis 7, **dadurch gekennzeichnet, daß** in der Trocknungszone mit einer kontinuierlichen Keimdosierung gearbeitet wird, wobei bevorzugt gemahlenes Biomassen-Trockengut als Keimmaterial eingesetzt wird.

9. Verfahren nach einem der Ansprüche 1 bis 8, **dadurch gekennzeichnet, daß** man Teilchendurchmesser von 0,5 bis 5 mm, insbesondere von 1 bis 3 mm, einstellt.

10. Verfahren nach einem der Ansprüche 1 bis 9, **dadurch gekennzeichnet, daß** man Biomassen-Rückstände dem Verfahren zuführt, die für den beabsichtigten Einsatz als Düngemittel schadstoffarm beziehungsweise schadstofffrei sind.

11. Verfahren nach einem der Ansprüche 1 bis 10, **dadurch gekennzeichnet, daß** man Biomassen-Rückstände aus der biotechnologischen Wertstoffgewinnung, insbesondere aus der fermentativen Wertstoffbildung unter Einsatz von Bakterien, Pilzen, Hefen und/oder Algen dem Verfahren unterwirft.

12. Abwandlung des Verfahrens nach einem der Ansprüche 1 bis 11, **dadurch gekennzeichnet, daß** in der Wirbelschicht-Sprühagglomeration zusammen mit den Biomasse-Rückständen weitere - bevorzugt feinteilig feste und/oder wenigstens anteilsweise wasserlösliche - Wert- und/oder Hilfsstoffe zur Förderung des Pflanzenwachstums in das körnige Gut eingebunden werden.

13. Verfahren nach Anspruch 12, **dadurch gekennzeichnet, daß** weitere Wertstoffe mit Düngemittelwirkung und/oder Wasser-Retentionsmittel mit eingebunden werden, wobei entsprechende Wertstoffe pflanzlichen und/oder tierischen Ursprungs bevorzugt sein können, aber auch Hilfsstoffe auf mineralischer Basis mitverwendet werden können.

14. Verfahren nach einem der Ansprüche 12 oder 13, **dadurch gekennzeichnet, daß** die fließfähige Zubereitung der Biomassen-Rückstände auf Mikroorganismenbasis als Bindemittel im Mehrstoffgemisch eingesetzt wird, das bei der Sprühagglomeration in die rotierende Wirbelschicht des partikulären Mehrstoffgemisches eingesprüht und darin aufgetrocknet wird.

15. Verfahren nach einem der Ansprüche 12 bis 14, **dadurch gekennzeichnet, daß** die Biomassen-Rückstände auf Mikroorganismenbasis wenigstens 5 Gew.-%, vorzugsweise wenigstens 10 bis 20 Gew.-% und insbesondere wenigstens 30 bis 40 Gew.-% des körnigen Trockengutes ausmachen.

16. Verfahren nach einem der Ansprüche 12 bis 15, **dadurch gekennzeichnet, daß** die weiteren Wert- und/oder Hilfsstoffe als feinteiliges Feststoffgut mit bevorzugten mittleren Teilchengrößen unterhalb 1 mm, insbesondere nicht größer als 0,5 mm, in die Wirbelschicht-Naßagglomeration eingeführt werden und dabei wenigstens anteilsweise auch die Funktion der Keimdosierung übernehmen.

## Claims

1. A process for working up biomass residues from the biotechnological production of useful materials by microorganisms, which have to be disposed of after removal of the useful materials obtained, into granular solids using a gas phase, **characterized in that** flowable preparations of the biomass residues are converted by fluidized bed drying known per se and spray agglomeration using superheated steam as the drying gas phase into an at least substantially odourless, sterile and dust-free solid material which may be used as a long-acting organic fertilizer.

2. A process as claimed in claim 1, **characterized in that** the drying of the biomass residues is carried out by spray agglomeration in a rotating fluidized bed, the particles being built up by spraying the aqueous preparation into the fluidized bed for wet agglomeration and subsequent drying.

3. A process as claimed in claim 1 or 2, **characterized in that** the water-containing biomass is sprayed into the fluidized bed through multicomponent nozzles using a propellent gas phase, superheated steam preferably being used as the propellent gas.

4. A process as claimed in any of claims 1 to 3, **characterized in that** the superheated steam is delivered to the drying zone with temperatures of at least 150°C, preferably in the range from 180 to 300°C and more preferably in the range from 200 to 250°C.

5. A process as claimed in any of claims 1 to 4, **characterized in that** the average residence time of the granular material to be dried in the superheated steam is at least 5 to 10 minutes, preferably at least 15 minutes, more preferably at least 30 minutes and most preferably a matter of hours, residence times of 1 to 3 hours being most particularly preferred.

6. A process as claimed in any of claims 1 to 5, **characterized in that** the exit temperatures of the superheated steam from the drying zone are at least 110°C and preferably at least 115 to 120°C.

7. A process as claimed in any of claims 1 to 6, **characterized in that** the superheated steam removed from the fluidized bed drying zone is recycled, for which purpose the stream of superheated steam removed from the drying zone is preferably freed from entrained fine dust fractions which are returned to the drying zone, the water evaporated during drying is removed and preferably put to another use while the circulated stream of superheated steam is reheated to operating temperature before being returned to the drying zone.

8. A process as claimed in any of claims 1 to 7, **characterized in that** the drying zone is operated with continuous seed input, ground dry biomass preferably being used as the seed material.

9. A process as claimed in any of claims 1 to 8, **characterized in that** particle diameters of 0.5 to 5 mm and more particularly from 1 to 3 mm are adjusted.

10. A process as claimed in any of claims 1 to 9, **characterized in that** biomass residues low in or free from pollutants for their intended use as a fertilizer are subjected to the process.

11. A process as claimed in any of claims 1 to 10, **characterized in that** biomass residues from the biotechnological production of useful materials, more particularly from the fermentative production of useful materials using bacteria, fungi, yeasts and/or algae, are subjected to the process.

12. A modification of the process claimed in any of claims 1 to 11, **characterized in that** other, preferably fine-particle solid and/or at least partly water-soluble useful materials and/or auxiliaries for promoting plant growth are incorporated in the granular material together with the biomass residues during the fluidized bed spray agglomeration.

13. A process as claimed in claim 12, **characterized in that** other useful materials with a fertilizer effect and/or water retention agents are incorporated, corresponding useful materials of vegetable and/or animal origin being preferred although mineral-based auxiliaries may also be used.

14. A process as claimed in claim 12 or 13, **characterized in that** the flowable preparation of the microorganism-based biomass residues is used as a binder in the multicomponent mixture which is sprayed into and dried in the rotating fluidized bed of the particulate multicomponent mixture during the spray agglomeration.

15. A process as claimed in any of claims 12 to 14, **characterized in that** the microorganism-based biomass residues make up at least 5% by weight, preferably at least 10 to 20% by weight and more preferably 30 to 40% by weight of the granular material to be dried.

16. A process as claimed in any of claims 12 to 15, **characterized in that** the other useful materials and/or auxiliaries are introduced into the fluidized bed wet agglomeration as fine-particle solids with preferred average particle sizes below 1 mm and more particularly no greater than 0.5 mm and at least partly also perform the function of seed input.

## Revendications

1. Procédé de traitement de résidus de biomasses provenant de la production biotechnologique de substances valorisables à l'aide de micro-organismes, qui, après séparation des substances valorisables produites, doivent être soumis à une élimination, afin de former un produit solide granuleux avec intervention d'une phase gazeuse, **caractérisé en ce qu'**on transforme à l'aide du séchage en lit fluidisé connu en soi avec agglomération par pulvérisation et utilisation de vapeur d'eau surchauffée comme phase gazeuse de séchage les préparations fluides de résidus de biomasses en un matériau solide stérile et exempt de poussières, au moins en grande partie inodore, qui est utilisable comme engrais organique avec action de longue durée.

2. Procédé suivant la revendication 1, **caractérisé en ce qu'**on réalise le séchage des résidus de biomasses sous forme d'agglomération par pulvérisation dans un lit fluidisé en rotation et réalise ce faisant la granulation par pulvérisation de la préparation aqueuse dans le lit fluidisé avec agglomération humide suivie de séchage.

3. Procédé suivant l'une des revendications 1 ou 2, **caractérisé en ce qu'**on pulvérise le matériau aqueux de départ de la biomasse dans le lit fluidisé via des gicleurs à plusieurs constituants avec l'aide d'une phase de gaz propulseur, de la vapeur d'eau surchauffée étant utilisée de préférence comme gaz propulseur.

4. Procédé suivant l'une des revendications 1 à 3, **caractérisé en ce qu'**on amène la vapeur d'eau surchauffée dans la zone de séchage à des températures de mise en oeuvre d'au moins 150°C, de préférence de 180 à 300°C et en particulier dans une plage de température de 200 à 250°C.

5. Procédé suivant l'une des revendications 1 à 4, **caractérisé en ce qu'**on travaille avec des temps de séjour moyens de la matière sèche granuleuse dans la zone de la vapeur d'eau surchauffée d'au moins 5 à 10 minutes, utilement d'au moins 15 minutes, de préférence d'au moins 30 minutes et en particulier de l'ordre de plusieurs heures, des temps de séjour de 1 à 3 heures pouvant être préférés.

6. Procédé suivant l'une des revendications 1 à 5, **caractérisé en ce qu'**on travaille avec des températures de sortie de la vapeur d'eau surchauffée hors de la zone de séchage d'au moins 110°C, de préférence d'au moins 115 à 120°C.

7. Procédé suivant l'une des revendications 1 à 6, **caractérisé en ce qu'**on travaille avec recyclage de la vapeur d'eau surchauffée extraite de la zone de séchage en lit fluidisé, le flux de vapeur surchauffée extrait de la zone de séchage étant de préférence débarrassé des fines particules de poussière entraînées et celles-ci renvoyées dans la zone de séchage, l'eau évaporée lors du séchage étant séparée et de préférence réutilisée, tandis que le flux de vapeur d'eau surchauffée mis en circuit fermé est réchauffé à température de mise en oeuvre avant renvoi dans la zone de séchage.

8. Procédé suivant l'une des revendications 1 à 7, **caractérisé en ce qu'**on travaille dans la zone de séchage avec un dosage de germes continu, de la matière sèche de biomasses moulue étant utilisée comme matériau de germination.

9. Procédé suivant l'une des revendications 1 à 8, **caractérisé en ce qu'**on règle un diamètre de particule de 0,5 à 5 mm, en particulier de 1 à 3 mm.

10. Procédé suivant l'une des revendications 1 à 9, **caractérisé en ce qu'**on soumet au procédé des résidus de biomasses qui, pour l'utilisation envisagée comme engrais, sont pauvres en substances nocives ou exempts de substancës nocives.

11. Procédé suivant l'une des revendications 1 à 10, **caractérisé en ce qu'**on soumet au procédé des résidus de biomasses provenant de la production biotechnologique de substances valorisables, en particulier de la formation de substances valorisables par fermentation avec utilisation de bactéries, champignons, levures et/ou algues.

12. Variante du procédé suivant l'une des revendications 1 à 11, **caractérisé en ce que**, dans le procédé d'agglomération par pulvérisation en lit fluidisé, on lie dans la matière granuleuse, avec les résidus de biomasses, d'autres substances valorisables et/ou substances auxiliaires favorisant la croissance des plantes - de préférence sous forme de fines particules solides et/ou au moins en partie hydrosolubles.

13. Procédé suivant la revendication 12, **caractérisé en ce que** d'autres substances valorisables avec effet d'engrais et/ou agents de rétention d'eau sont liés, des substances valorisables correspondantes d'origine végétale et/ou animale pouvant être préférées, des substances auxiliaires à base minérale pouvant cependant également être employées.

14. Procédé suivant la revendication 12 ou 13, **caractérisé en ce qu'**on utilise la préparation fluide de résidus de biomasses à base de micro-organismes comme liant dans un mélange à plusieurs composants, qui est pulvérisé dans le lit fluidisé en rotation lors de l'agglomération par pulvérisation du mélange de particules à plusieurs composants et y est séché.

15. Procédé suivant l'une des revendications 12 à 14, **caractérisé en ce que** les résidus de biomasses à base de micro-organismes constituent au moins 5 % en poids, de préférence au moins 10 à 20 % en poids et en particulier au moins 30 à 40 % en poids de la matière sèche granuleuse.

16. Procédé suivant l'une des revendications 12 à 15, **caractérisé en ce que** les autres substances valorisables et/ou substances auxiliaires sont introduites en tant que substance solide en fines particules d'une taille moyenne de particules de préférence inférieure à 1 mm, en particulier non supérieure à 0,5 mm, dans l'agglomération humide en lit fluidisé et ce faisant reprennent au moins en partie la fonction de dosage de germes.
